Europäisches Patentamt

European Patent Office

Office européen des brevets

(11) Publication number: **0 301 048**
**B1**

(12) EUROPEAN PATENT SPECIFICATION

(45) Date of publication of patent specification: 26.09.90

(21) Application number: 88901076.5

(22) Date of filing: 29.01.88

(86) International application number:
PCT/GB88/00054

(87) International publication number:
WO 88/05903 11.08.88 Gazette 88/18

(51) Int. Cl.⁵: **G 01 B 9/02,** G 01 D 5/26,
G 01 J 9/02, G 01 H 9/00

(54) IMPROVEMENTS RELATING TO OPTICAL INTERFEROMETERS.

(30) Priority: 31.01.87 GB 8702172

(43) Date of publication of application:
01.02.89 Bulletin 89/05

(45) Publication of the grant of the patent:
26.09.90 Bulletin 90/39

(84) Designated Contracting States:
BE DE FR GB IT NL SE

(56) References cited:
Electronics letters, vol 20, no 1, 5 January 1984,
(London GB) JP Dakin et al: "Novel optical fibre
hydrophone array using a single laser source
and detector", pages 53-54

Optics letters, vol 7, no 7, July 1982, Optical
Society of America, New York, N.Y. US) E Gies
et al: "Single-loop polarization stabilization for
single-mode fibre", pages 337-338

Journal of Lightwave Technology, vol LT-3, no
6, December 1985, IEEE, (New York N.Y. US) T
Okoshi: "Polarization-state control schemes for
heterodyne or homodyne optical fiber
communications", pages 1232-1237

(73) Proprietor: **PLESSEY OVERSEAS LIMITED**
**Vicarage Lane**
**Ilford Essex IG1 4AQ (GB)**

(72) Inventor: **WADE, Christopher, Anthony**
**Sachs Freeman Associates Incorporated**
**140 McCormick Drive Landover, MD 20785 (US)**
Inventor: **DAKIN, John, Philip**
**Whinwhistle Road**
**East Wellow Hampshire (GB)**

(74) Representative: **Nicholson, Ronald**
**Intellectual Property Department The Plessey**
**Company plc 2-60 Vicarage Lane**
**Ilford Essex IG1 4AQ (GB)**

(56) References cited:
**Patent Abstract of Japan, vol 10, no 119**
**(P-453)(2176), 6 May 1986 & JP-A-60247123**

Courier Press, Leamington Spa, England.

**Description**

This invention relates to optical interferometers and relates more specifically to optical fibre interferometers of the kind in which light signals propagating along optical fibre means are caused to interfere with one another and the interference is detected by photodetector means.

Such optical fibre interferometers often suffer so-called polarisation fading which occurs when the states of polarisation of two interfering fields become orthogonal thereby preventing the signals being mixed on the photo-detector means and resulting in a loss of signal. Optical fibre interferometers are particularly prone to this phenomenon because the birefringence in the optical fibre varies according to the temperature and strain (e.g. induced by bending of the fibre) the fibre experiences. The two interfering light signals are therefore subject to different and varying birefringences which results in their states of polarisation varying with the ambient conditions.

Various methods have been proposed for enabling the state of polarisation at the output end of an optical fibre to be stabilised by an active control system. However, such active control systems would have to be inserted in one or both of the arms of a two-arm interferometer in front of the usual beam combiner in order to be effective but this would greatly increase the complexity of the interferometer. Furthermore, many optical fibre interferometers, particularly those used in sensing applications, are passive devices and the inclusion of an active element would be inappropriate making remote location of the interferometer impractical.

Another proposed solution to the polarisation fading problem involves dividing the combined output light from the two-arm interferometer between three separate photo-detectors each of which is masked by a polariser and the three polarising masks having different orientations. With this arrangement it is not possible for the interfering signal to fade on all three detectors simultaneously. Consequently, by using suitable processing, a useful output can be obtained, but it nevertheless requires the provision of three photo-detectors.

The present invention is directed to an alternative method of eliminating polarisation fading in optical fibre interferometers which has the advantage of requiring only a single photo-detector.

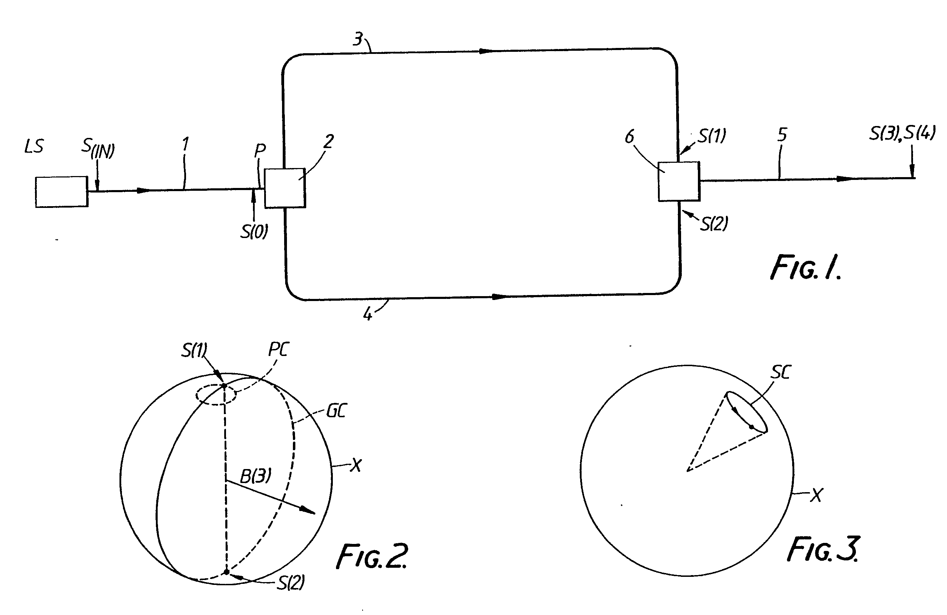

However, in order to fully understand the present invention it is first necessary to consider the theory of polarisation fading and for this purpose reference will be made to Figures 1 and 2 of the accompanying drawings.

Referring to Figure 1, polarised light from a laser source LS is launched into an input fibre 1 of a two-arm interferometer and propagates along the fibre 1 to beam splitting means 2. At this point P the state of polarisation of the light is S (O) which is not necessarily the same as the state of polarisation S (IN) of the light emerging from the laser source LS because of birefringence in the input fibre 1. The light is split by the beam splitting means 2 and part travels through each of two optical fibre arms 3 and 4 before being recombined into an output fibre 5 by beam combining means 6.

The two optical fibre arms 3 and 4 will, in general, have different birefringences B(1) and B(2) and the light beams arriving at the beam combining means 6 will therefore have differnt states of polarisation, namely S(1) and S(2). For some states of polarisation S(O) at the point P and birefringences B(1) and B(2), the states of polarisation S(1) and S(2) will be orthogonal and thus not interfere. Using the Poincaré sphere representation shown in Figure 2 the states of polarisation are represented by points on the surface of the sphere X and propagation through birefringent elements, such as the optical fibres 3 and 4, is represented by a rigid rotation of the sphere X. Orthogonal states of polarisation are represented by points diametrically opposed on the sphere. It can be appreciated therefore that the state of fading of the interferometer of Figure 1 will be determined by the relationship between the states of polarisation S(1) and S(2). If the states of polarisation S(1) and S(2) are orthogonal, as represented by the diametrically opposite points in Figure 2, then the output states of polarisation S(3) and S(4) at the end of the output optical fibre 5 will also be orthogonal since the birefringence of the output fibre 5 is represented by a rigid rotation of the Poincaré sphere and two diametrically-opposed points remain diametrically-opposed after a rigid rotation. Thus, by ensuring that the states of polarisation S(1) and S(2) are not orthogonal, polarisation fading can be prevented.

The effect of the birefringences B(1) and B(2) of the optical fibres 3 and 4 on the relative orientation of the states of polarisation S(1) and S(2) can be evaluated by asserting that the state of polarisation S(2) results from the action of the inverse of the birefringence B(1) followed by the action of birefringence B(2) on the state of polarisation S(1). In view of the Poincaré sphere, the inverse of birefringence B(1) is simply a rotation the same as that corresponding to birefringence B(1) but in the opposite sense. Combining the two rotations corresponding to the inverse of this birefringence B(1) followed by B(2) results in an equivalent single rotation, say rotation B(3), which converts the state of polarisation S(1) to S(2). Now if the states of polarisation S(1) and S(2) are orthogonal (i.e. diametrically-opposed on the sphere) the birefringence B(3) must have a magnitude of π and states of polarisation S(1) and S(2) will be on a diameter that is perpendicular to the birefringence B(3). Hence, for given arm birefringences B(1) and B(2) there exists a single birefringence B(3) defined above which maps the state of polarisation S(1) on to S(2) and if the magnitude of the birefringence B(3) is π there is a range of states of polarisation S(1) represented by a great circle, such as GC, on the Poincare sphere which is perpendicular to the birefringence B(3) for which the interferometer output will be totally faded. The state of polarisation S(1) depends upon the interferometer input polarisation S(IN), the birefringence of the input fibre 1 and the birefringence B(1) of the interferometer arm 3 and will usually vary slowly with time as small environmental temperature changes vary the birefringence of the fibres 3 and 4. Thus, no matter what the input polarisation for certain combinations of birefringence may be the interferometer output can fade.

According to the present invention there is provided an optical interferometer comprising light source means for producing polarised light signals of predetermined frequency which, in operation of the interferometer, propagate along optical fibre or other optical transmission means and are modulated, as by the sensing of a variable parameter (e.g. acoustic wave or temperature), to produce interfering light signals, characterised in that polarisation modulation means is introduced between the light source means and the optical transmission means to cause the Poincare sphere representation of the state of polarisation of the polarised light signals to describe a relatively small circle on the sphere surface so that a significant output signal is produced by the interferometer at least during part of the cycle of polarisation modulation of the light signals.

The present invention may be better understood by further reference to Figure 3 in conjunction with the specific two-arm example of interferometer shown in Figure 1.

Since the state of polarisation S(IN) of the input signal which is modulated to describe a small circle SC on the Poincare sphere transforms to the state of polarisation S(1) by rigid sphere rotations corresponding to the birefringences of the input optical fibre 1 and the optical fibre arm 3, the state of polarisations S(1) must also describe a similar small circle on the sphere although in general at a different position on the sphere surface. It is now impossible for the interferometer to fade for longer than a fraction of the cycle of the polarisation modulation. This is because the condition for polarisation fading is that the birefringence B(3) has a magnitude π and the state of polarisation S(1) lies on the great circle perpendicular to the birefringence B(3). It can thus be seen that if the state of polarisation S(1) moves in a relatively small circle PC (Figure 1) on the Poincare sphere complete polarisation fading will only occur where this relatively small circle intersects the great circle GC perpendicular to the birefringence B(3). For the remainder of the polarisation modulation cycle the states of polarisation S(1) and S(2) will not be orthogonal. The frequency of the polarisation modulation provided according to the present invention will generally be chosen to be outside the interferometer signal frequency bands so as to enable the wanted signals to be separated from the applied modulation by means of filtering.

By way of example two embodiments of the present invention will now be described with reference to Figures 4 to 7 of the accompanying drawings in which:

Figure 4 shows a reflecto-metric differential delay heterodyne interferometer sensor array which forms the subject of our British Patent Application No. GB—A—2,126,820 to which attention is hereby directed;

Figure 5 shows a pulse diagram which indicates the manner of interference between signals transmitted down the sensor array of Figure 4;

Figure 6 shows one arrangement for modulating the state of polarisation of the input signals to the sensor array of Figure 4; and,

Figure 7 shows an alternative polarisation modulation arrangement for modulating the state of polarisation of the input signals to the sensor array of Figure 4.

In the heterodyne interferometer shown in Figure 4 a pulsed laser 11 produces an output pulse of coherent light of frequency F which is fed into an optical switch means 12 wherein a modulated pulse of frequency F+ΔF is produced which by the inclusion of delay means in the optical switch means lags behind the pulse of frequency F by a predetermined time interval T. The two-pulse light signal passes through a beam splitter 13 and is focused into an optical fibre 14. Equi-spaced discontinuities 15 to 21 are provided along optical fibre and these discontinuities may be provided between optical fibre sections of equal length L spliced together by splices which are designed to be slightly reflective. The optical fibre is thus effectively divided by the discontinuities into six sensing elements of length L and variations in the lengths of these optical fibre elements, such as due to the impingement thereon of acoustic waves can be sensed and measured in the manner to be described.

As each two-pulse light signal reaches the first optical fibre discontinuity 15 a small proportion of the signal will be reflected back along the fibre 14 to the beamsplitter 13 which directs the signal to a photo-detector 22. The remaining part of the two-pulse signal travels on to discontinuity 16 at which a further small proportion thereof will be reflected back along the optical fibre 4 to the detector 22. This procedure continues until that part of the two-pulse signal remaining reaches the last of the optical fibre discontinuities 21 and a small proportion of this signal is again reflected back along the optical fibre to the detector 22. A further two-pulse optical transmission is then made and the cycle repeated.

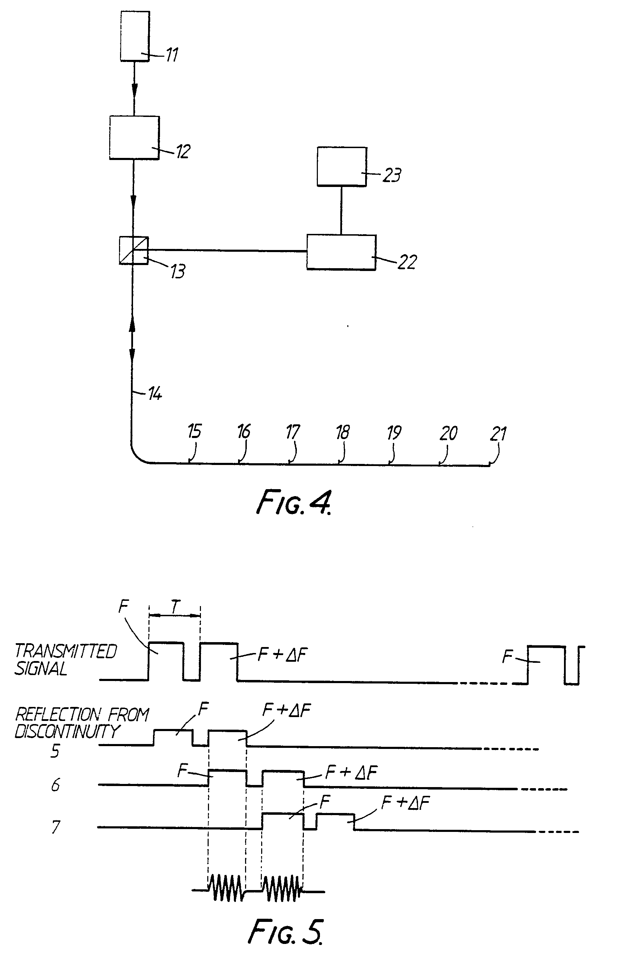

Referring now to Figure 5 of the drawings, this shows the reflections of the two-pulse signals from the discontinuities 15, 16 and 17. As can be seen from the drawing the reflection from the second discontinuity 16 in the present example is delayed with respect to the reflection from the first discontinuity 15 by a time T.

$$T = \frac{2L}{CG}$$

where L=the length of each optical fibre element and CG=the velocity of light in the optical fibre.

By the appropriate choice of the length L the delay between the reflections is such that there is total coincidence, or at least some overlap, between the reflected pulse of frequency F of a later reflected signal with the pulse of frequency F+ΔF of the preceding reflected signal. The reflected pulses are heterodyned in the square law detector 22 to produce beat or modulated signals, as shown, and the phase modulation of these signals will vary in dependence upon variations in length L of the optical fibre elements. Accordingly, by detecting and measuring the phase modulation of the beat signals by means of a phase detector 23 changes in length of the optical fibre elements and thus deformation forces acting on these elements can be measured. The sensing arrangement just above described is more fully described in our U.K. Patent No. 2,126,820B.

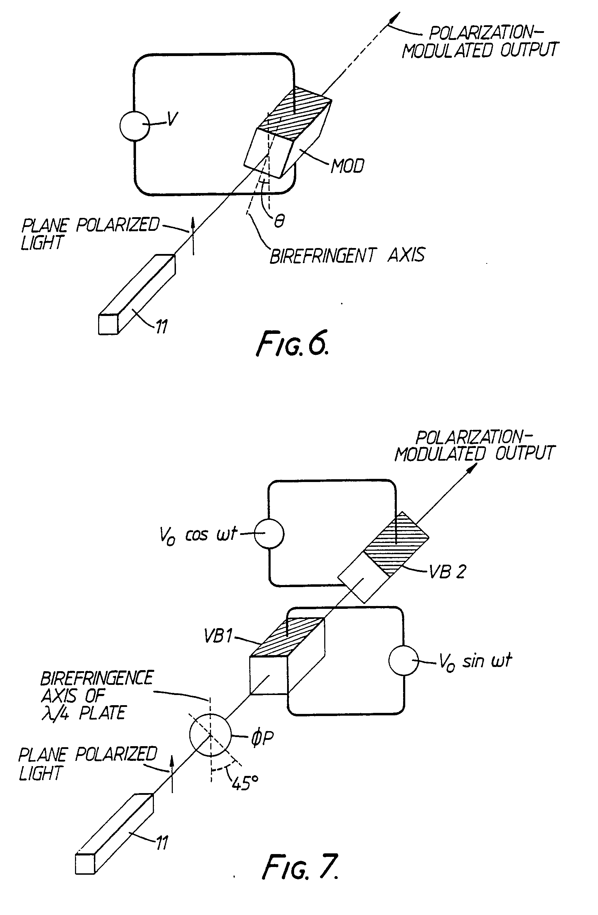

The present invention can be applied to the sensing arrangement just above described in order to prevent total fading of the signals due to the states of polarisation of the interfering signals being orthogonal. In order to achieve this a polarisation modulator, as shown at MOD in Figure 6, may be inserted between the optical source 11 and the optical switch means 12 in Figure 4. The modulator MOD could be inserted between 12 and 13 in some systems depending on the precise construction of the optical switch means 12. The modulator MOD can take various forms. For example, in one form, as shown in Figure 6, the modulator comprises a device having variable linear birefringence, such as an electro-optic modulator, having a birefringence the magnitude of which depends on an applied modulating voltage V. To apply the requisite modulation to plane-polarised light from the optical source 11 the electro-optic device should be oriented with its axis of birefringence at an angle θ (not 0°, 45° or 90°), to the plane of polarisation of the light from the light source 11. Time-varying electrical signals (e.g. sinusoidal, triangular or sawtooth) are applied to the variable birefringence device for modulating purposes. These modulating signals should be large enough to ensure that the magnitude of the birefringence varies by more than 2π radians, thus causing the state of polarisation of the output light from the modulator to describe a small circle on the previously referred to Poincare sphere similar to that shown at SC in Figure 3. In this way total fading of the interferometer output can only occur for a fraction of the polarisation modulation cycle period.

A further arrangement for achieving polarisation modulation is shown in Figure 7. In this example, plane-polarised light from the optical source 11 first passes through a quarter-wave plate QP orientated at 45° to the input polarisation, thereby producing circularly polarised light.

The light then passes through two variable birefringence elements VB1 and VB2 which are electrically controlled and whose axes of birefringence have an angular separation of 45°. These elements VB1 and VB2 may, for instance, be electro-optic modulators or they may be piezo-electric devices arranged to squeeze an optical fibre and so induce linear birefringence which is proportional to the voltage applied to the piezo-electric device. The two elements VB1 and VB2 are driven in quadrature by sinusoidal drive signals Vo sin wt and Vo cos wt so that the magnitudes of their birefringences vary as sin wt and cos wt, respectively. The peak birefringence is less than π/2. This arrangement produces a modulated polarisation output whose state of polarisation describes a small circle on the Poincare sphere previously described in order to obviate total fading of the interferometer output since fading will only take place for very short periods of time during the polarisation modulation period when the small circle described on the Poincare sphere intersects the great circle on which points representing the states of polarisation of the interfering signals are diametrically opposed.

## Claims

1. An optical interferometer comprising light source means (11) for producing polarised light signals of predetermined frequency which in operation of the interferometer propagate along optical transmission means (14) and are modulated to produce interfering light signals, characterised by polarisation modulation means (MOD) introduced between the light source means (11) and the optical transmission means (14) to cause the Poincaré sphere representation of the state of polarisation of the polarised light signals to describe a relatively small circle on the sphere surface so that a significant output signal is produced by the interferometer at least during part of the cycle of polarisation modulation of the light signals.

2. An optical interferometer as claimed in Claim 1, in which the polarisation modulation means comprises a device having variable linear birefringence.

3. An optical interferometer as claimed in Claim 2, in which the polarisation modulation means comprises an electro-optic modulator having a birefringence the magnitude of which depends on an applied modulating voltage.

4. An optical interferometer as claimed in Claim 3, in which the electro-optic device is orientated with its axis of birefringence at an angle (other than 0°, 45° or 90°) to the plane of polarisation of light from the light source means and in which time-varying modulating electrical signals are applied to the variable birefringence device, said modulating signals being sufficiently large to ensure that the magnitude of the birefringence varies by more than 2π radians thereby causing the state of polarisation of the output light from the modulator to describe said relatively small circle on said Poincaré sphere.

5. An optical interferometer as claimed in Claim 1, in which the light source means produces plane-polarised light which passes through a quarter wave plate orientated to produce circularly polarised light which then passes through the polarisation modulation means comprising two variable birefringence elements which are electrically controlled and whose axes of birefringence have an appropriate angular separation.

6. An optical interferometer as claimed in Claim 5, in which the variable birefringence elements comprises electro-optic modulators.

7. An optical interferometer as claimed in Claim 5, in which the variable birefringence elements comprises piezo-electric devices arranged to squeeze an optical fibre and so induce linear birefringences proportional to voltages applied to the piezo-electric devices.

8. An optical interferometer as claimed in Claim 5, 6 or 7, in which the two variable birefringence elements are driven in quadrature by sinusoidal drive signals so that the magnitudes of their birefringences vary in order to produce a modulated polarisation output whose state of polarisation describes a small circle on the Poincaré sphere.

**Patentansprüche**

1. Optisches Interferometer bestehend aus einer Lichtquelle (11) zur Erzeugung von polarisierten Lichtsignalen einer vorgegebenen Frequenz, die sich im Betriebszustand des Interferometers an einem optischen Übertragungsmittel (14) entlang fortpflanzen und zur Erzeugung von Störlichtsignalen moduliert werden, dadurch gekennzeichnet, daß ein Polarisierungsmodulationsmittel (MOD) zum Schlagen eines relativ kleinen Kreises auf der Kugeloberfläche bei der Poincare-Kugel-Darstellung des Polarisierungszustands der polarisierten Lichtsignale zwischen der Lichtquelle (11) un dem optischen Übertragungsmittel (14) eingeführt wird, so daß das Interferometer zumindestens in einem Teil des Polarisierungsmodulationszyklus der Lichtsignale ein signifikantes Ausgangssignal ergibt.

2. Optisches Interferometer nach Anspruch 1, dadurch gekennzeichnet, daß das Polarisierungsmodulationsmittel aus einer Vorrichtung mit variabler Linear-Doppelbrechung besteht.

3. Optisches Interferometer nach Anspruch 2, dadurch gekennzeichnet, daß das Polarisierungsmodulationsmittel aus einem elektro-optischen Modulator mit einer Doppelbrechung besteht, deren Größe von einer angelegten Modulierspannung abhängt.

4. Optisches Interferometer nach Anspruch 3, dadurch gekennzeichnet, daß die Doppelbrechungsachse der elektro-optischen Vorrichtung in einem Winkel (ausgenommen 0°, 45° oder 90°) zur Polarisierungsebene des aus der Lichtquelle kommenden Lichtes ausgerichtet ist, und daß zeitvariable elektrische Signale an die Vorrichtung mit variabler Doppelbrechung angelegt werden, wobei besagte Modulationssignale stark genug sind, um die Schwankung der Größe der Doppelbrechung um mehr als 2π Radianten zu gewährleisten, so daß der Polarisierungszustand des aus dem Modulator kommenden Lichtes besagten relativ kleinen Kreis auf besagter Poincare-Kugel schlägt.

5. Optisches Interferometer nach Anspruch 1, dadurch gekennzeichnet, daß die Lichtquelle ein linearpolarisiertes Licht erzeugt, das nach Durchgang durch eine Lambda-Viertel-Platte ein kreispolarisiertes Licht ergibt, welches dann durch das aus zwei variablen Doppelbrechungselementen, die elektrische gesteuert werden und deren Doppelbrechungsachsen eine geeignete Winkeltrennung aufweisen, bestehende Polarisierungsmodulationsmittel geht.

6. Optisches Interferometer nach Anspruch 5, dadurch gekennzeichnet, daß die variablen Doppelbrechungselemente aus elektro-optischen Modulatoren bestehen.

7. Optisches Interferometer nach Anspruch 5, dadurch gekennzeichnet, daß die variablen Doppelbrechungselemente aus piezo-elektrischen Vorrichtungen bestehen, die so angeordnet sind, daß sie eine Lichtleitfaser quetschen und somit Linear-Doppelbrechungen induzieren, die den an die piezo-elektrischen Vorrichtungen angelegten Spannungen proportional sind.

8. Optisches Interferometer nach einem der Ansprüche 5, 6 oder 7, dadurch gekennzeichnet, daß die beiden variablen Doppelbrechungselemente um 90° phasenverschoben so von Sinussignalen gesteuert werden, daß die Größe ihrer Doppelbrechungen zur Erzeugung eines Ausgangssignals mit modulierter Polarisierung variiert, dessen Polarisierungszusand auf der Poincare-Kugel einen kleinen Kreis schlägt.

**Revendications**

1. Interféromètre optique, comprenant un dispositif à source lumineuse (11) destiné à créer des signaux lumineux polarisés de fréquence prédéterminée que, pendant le fonctionnement de l'interféromètre, se propagent le long de dispositifs de transmission optique (14) et sont modulés afin qu'ils créent des signaux lumineux d'interférences, caractérisé par un dispositif de modulation de polarisation (MOD) introduit entre le dispositif à source lumineuse (11) et le dispositif (14) de transmission optique de manière que la représentation de l'état de polarisation des signaux lumineux polarisés sur la sphère de Poincaré décrive un cercle relativement petit à la surface de la sphère, si bien qu'un signal important de sortie est produit par l'interféromètre pendant une partie au moins du cycle, de modulation de la polarisation des signaux lumineux.

2. Intéféromètre optique selon la revendication 1, dans lequel le dispositif de modulation de la polarisation comporte un dispositif ayant une biréfringence linéaire variable.

3. Interféromètre optique selon la revendication 2, dans lequel le dispositif de modulation de la polarisation est un modulateur électro-optique ayant une biréfringence dont l'amplitude dépend de la tension de modulation qui lui est appliquée.

4. Interféromètre optique selon la revendication 3, dans lequel le dispositif électro-optique a une orientation telle que son axe de biréfringence forme un certain angle (autre que 0°, 45° ou 90°) avec le plan de polarisation de la lumière du dispositif à source lumineuse, et dans lequel des signaux électriques de modulation, variant au cours du temps, sont appliqués au dispositif à biréfringence variable, les signaux de modulation étant suffisamment importants pour que l'amplitude de la biréfringence varie de plus de $2\pi$ radians et provoque ainsi la description d'un cercle relativement petit sur la sphère de Poincaré par l'état de polarisation de la lumière de sortie du modulateur.

· 5. Interféromètre optique selon la revendication 1, dans lequel le dispositif à source lumineuse crée de la lumière polarisée dans un plan, traversant une lame quart d'onde orientée de manière qu'elle donne de la lumière polarisée circulairement qui passe alors dans le dispositif de modulation de polarisation comprenant deux éléments à biréfringence variable qui sont commandés électriquement et dont les axes de biréfringence présentent une séparation angulaire convenable.

6. Interféromètre optique selon la revendication 5, dans lequel les éléments à biréfringence variable sont des modulateurs électro-optiques.

7. Interféromètre optique selon la revendication 5, dans lequel les éléments à biréfringence variable sont des dispositifs piézoélectriques destinés à serrer une fibre optique et à provoquer ainsi des biréfringences linéaires proportionelles aux tensions appliquées aux dispositifs piézoélectriques.

8. Interféromètre optique selon la revendication 5, 6 ou 7, dans lequel les deux éléments à biréfringence variable sont pilotés en quadrature par des signaux sinusoïdaux de pilotage de manière que les amplitudes de leur biréfringence varient et donnent un signal à polarisation modulée dont l'état de polarisation décrit un petit cercle sur la sphère de Poincaré.

LS

S(IN)

1

P

S(0)

2

3

4

6

S(1)

5

S(3), S(4)

S(2)

FIG. 1.

S(1)

PC

GC

B(3)

X

S(2)

FIG. 2.

SC

X

FIG. 3.

EP 0 301 048 B1

FIG. 4.

FIG. 5.

2

FIG. 6.

FIG. 7.